# EUROPEAN PATENT APPLICATION

(11) **EP 3 462 343 A1**
(43) Date of publication of application: **03.04.2019**
(21) Application number: 17193416.9
(22) Date of filing: 27.09.2017
(51) Int. Cl.: G06F 17/50, G05B 17/02

(54) **MULTI-DOMAIN SIMULATION OF PHYSICAL SYSTEMS**

(71) Applicant: Siemens Aktiengesellschaft, 80333 München (DE)
(72) Inventor: Brandstetter, Veronika, 81673 München (DE); Wehrstedt, Jan Christoph, 81829 München (DE)

(57) **Abstract**

Present invention concerns a method of simulating a physical system (100), the physical system (100) comprising a plurality of components (110,..., 140), wherein the simulation pertains to a plurality of domains (210,..., 240), wherein different domains (210,..., 240) represent different sets of parameters pertaining to the physical system (100), the method comprising providing, for at least one of the plurality of components (110, ..., 140), a multi-domain representation (200), wherein a multi-domain representation (200) represents a component (110,..., 140) in two or more domains (210,..., 240), and providing a simulation of the physical system (100) based on the multi-domain representation (200).

The invention also concerns related devices.

## Description

Present invention concerns the simulation of a physical system.

### Background of the Invention

Simulations of systems are used, for example, in research and development to predict system behaviour. Currently, system components are represented as 1-dimensional (1d) objects, for one specific domain of interest. Such a domain may, for example, represent pressure or fluid flow speed, or electrical current. Different objects can be connected to each other, if they are associated to the same domain. Accordingly, different components can be connected in 1d domains. The components are typically visualised on a worksheet. However, for large systems, multiple worksheets may be necessary. In such cases, connectors may be defined, which indicate that objects thusly connected represent the same component on different worksheets. For simulating the system, the relevant domains and objects are selected to create an overall model of the system for simulation.

### Disclosure of the Invention

It is an object of the present invention to provide improved approaches for simulating physical systems. In particular, improved ways of representing components of a system are considered.

There is described a method of simulating a physical system. The physical system comprises a plurality of components. The simulation pertains to a plurality of domains, wherein different domains represent different sets of parameters pertaining to the physical system. The method comprises providing, for at least one of the plurality of components, a multi-domain representation. A multi-domain representation generally represents a component in two or more domains. The method also comprises providing a simulation of the physical system based on the multi-domain representation. The method allows improved setup and handling of simulations spanning multiple domains. For each component, the relevant domain may be represented in one object or data structure, facilitating easier referencing and handling, in particular in the context of visualisation. Also, selection of domains of interest is improved, due to the multi-domain representation of a component facilitating easy association of parameters of one domain to a component.

It may be considered that a domain represents a set of physical parameters and/or control parameters of the physical system, in particular a set of parameters pertaining to dynamics and/or flow. Such domains are usually of particular importance, and may be chosen to be easily separable regarding their possible interactions or interdependencies.

The plurality of domains may comprise at least two of kinematic domain, mechanic domain, thermodynamic domain, electromagnetic domain, control or automatization domain, hydrodynamic domain, pressure domain, force domain, hydraulic domain, acoustic domain, vibration domain, electric domain, signalling domain, stress domain, magnetic domain. A multi-domain representation may generally represent a component in more than one of the domains the simulation pertains to, in particular selected from this list of domain examples.

In some variants, the method comprises controlling and/or developing a physical system based on the simulation. Thus, information or data from the simulation can be directly input into a physical system or to construct or monitor the physical system.

It may be considered that providing a simulation comprises visualising the simulation. Thus, a user may be informed in a convenient way about the simulation and/or the physical system.

In some embodiments, visualising may comprise providing a domain view of one or more components and/or the physical system, in particular based on a domain selection. A domain view allows focusing on specific aspects of interest.

There is also disclosed a simulation tool for simulating a physical system, wherein the physical system comprises a plurality of components. The simulation pertains to a plurality of domains, wherein different domains represent different sets of parameters pertaining to the physical system. The simulation tool is adapted for providing, for at least one of the plurality of components, a multi-domain representation, wherein a multi-domain representation represents a component in two or more domains, and wherein the simulation tool further is adapted for providing a simulation of the physical system based on the multi-domain representation. Generally, the simulation tool may comprise a representation module for providing one or more representations, and/or a simulation tool for providing the simulation.

A domain may represent a set of physical parameters and/or control parameters of the physical system, in particular a set of parameters pertaining to dynamics and/or flow.

Generally, the plurality of domains may comprise at least two of kinematic domain, mechanic domain, thermodynamic domain, electromagnetic domain, control or automatization domain, hydrodynamic domain, pressure domain, force domain, hydraulic domain, acoustic domain, vibration domain, electric domain, signalling domain, stress domain, magnetic domain.

The simulation tool may further be adapted for controlling and/or developing a physical system based on the simulation.

It may be considered that the tool comprises a corresponding controlling and/or developing module.

It may be considered that providing a simulation comprises visualising the simulation. The tool may comprise a corresponding visualisation module.

Visualising in some variants may comprise providing a domain view of one or more components, in particular based on a domain selection.

The simulation tool may comprise an interface to one or more components of the physical system represented in the simulation. Such an interface may facilitate control and/or operation and/or monitoring of the component/s connected. The interface may be adapted for unidirectional or bidirectional or multidirectional communication.

Additionally, there may be considered a computer program comprising instructions causing a computer system to perform and/or control a method as disclosed herein, for example when executed by, or run on, the computer system, for example processing circuitry thereof.

A storage medium storing a computer program as described herein may be considered.

A simulation tool may be implemented in software and/or hardware and/or firmware. The tool may comprise one or more devices, and/or may be implemented with distributed functionality.

The method may especially be carried out, completely or in part, by a computer system. To this end, the method may be formulated as a computer program product with program code means. The above described tool or system may comprise the computer system. Advantages or features of the method may apply to the tool and vice versa.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Fig. 1: schematically shows an exemplary physical system;
- Fig. 2: schematically shows an exemplary multi-domain representation according to the invention;
- Fig. 3: schematically shows a model used for a simulation according to the invention; and
- Fig. 4: shows a flow diagram of an exemplary method of the invention.

### Detailed Exemplary Embodiments of the Invention

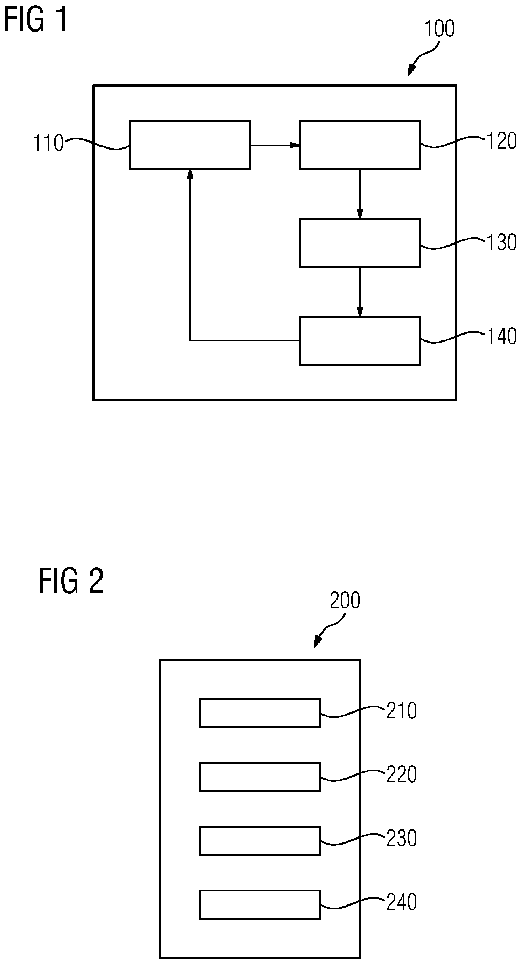

Fig. 1 shows an exemplary physical system 100, comprising exemplary components 110, 120, 130 and 140. The components of a physical system may generally be devices or arrangements, and/or may represent functionalities implemented in a device or arrangement. It should be noted that the physical system to be simulated may be an actual system, or a theoretical system, e.g. a system under development, or a representation of a system based on physical characteristics, which may be limited to relevant characteristics in the context of the simulation. In the example of Fig. 1, the physical system may comprise a pump 110, a valve 120, a reactor 130 and a heat exchanger 140. To simulate the system, multiple domains may be considered. For example, a fluid flow carrying a cooling fluid may be considered in a fluid or hydrodynamic domain. A pressure domain may describe the pressure of the fluid, or may be included in the hydrodynamic domain. For controlling the components, e.g. the pump 110 and the valve 120, there may be considered a signalling or control domain, which may pertain to the signalling provided to the components. A thermodynamic domain may describe the heat or temperature distribution for the components.

The physical system and domains of Fig. 1 are examples only, systems with different components and/or domains may be considered. A domain may generally represent a set of parameters, in particular a set of parameters describing one or more physical characteristics. Different domains may pertain to different characteristics. In particular, different domains may pertain to different physical regimes or theories or equations used to describe the behaviour of the characteristics. A simulation may be considered to the pertain to the domains associated to one or more of its components.

It should be noted that in the context of this disclosure, a static domain, e.g. hydrostatic or mechanically static domain, is considered a specific form of the associated dynamic domain. A set of parameters may comprise at least one parameter, for example one or more of signal level or content, bit setting, a physical value like pressure or force, a vector, matrix or tensor, and/or may pertain to a physical characteristic or parametrisation. A few corresponding examples comprise, but are not limited to, velocity, speed, electromagnetic field strength, flow density, electric current, or stress.

Fig. 2 shows an exemplary multi-domain representation 200 of a component. The component may be one of the components 110...140, or a different component. The representation may be considered multi-dimensional, in particular pertaining to a plurality of sets of parameters. The representation may in particular be implemented as a data structure and/or object, for example in a software implementation, and/or created when running a software. The multi-domain representation in the example may pertain to a first domain 210, which may be a mechanic domain, a second domain 220, which may be a control or automatization domain, a third domain 230, which may be a thermodynamic domain, and a fourth domain 240, which may be a hydrodynamic domain. However, any number of domains and/or order of domains and/or sets of domains may be considered. The domains may be linked, e.g. by information representing interaction between different domains. For example, if the component is a pump, the first domain 210 may represent a rotational speed of the pump, the second domain 220 may represent a signalling domain, e.g. control signalling, the third domain 230 may represent a heat of a fluid flow, e.g. its temperature, and the fourth domain may represent a fluid flow. The signalling domain 220 may for example be linked to any of the other domains, e.g. to indicate that the flow is dependent on control signalling to the pump. Other components and/or domains may be treated accordingly.

A multi-domain representation of a component may generally comprise and/or be implemented as a data structure representing the sets of parameters associated to the domains associated to the multi-domain representation. A domain may be considered associated to a multi-domain representation and/or component, if a corresponding set of parameters is provided for the representation or component. When creating, or providing, a multi-domain representation, default values may be provided for one or more parameters, which may for example be changed later based on input, and/or during providing the simulation. A multi-domain representation may be implemented as a single object, e.g. data object or data structure, representing the component in more than one domain.

Generally, the multi-domain representation 200 may be provided based on an indication of its existence, for example an input, e.g. a user selection and/or input commands, e.g. input by a user or read from an instruction set, e.g. a batch file. Providing a multi-domain representation of a component may comprise creating and/or providing an associated data structure and/or object. The multi-domain representation of a component may be provided such that with an indication of existence of the component in one domain, the representation is created to comprise the other domains as well. The number and/or kind of domains for a representation may be determined based on input like a domain description, which may be component-based or system-based. The description may for example be provided by corresponding input, e.g. user input or commands, e.g. read from a file, and/or may represent requirements for the simulation of the system. A system-based description may indicate the domains relevant for the simulation of the system as a whole. For example, for each component the same set of domains may be defined and/or created and/or provided, which also represent the domains of the system. A component-based description may indicate different sets of domains for different components. The domains of the system may comprise the domains of the different components.

It should be noted that a set of domains may comprise one or more domains, in particular at least two domains. A component-based description may be used to provide different sets of domains for different components, for example, if some domains are not relevant for a component, but for others. The simulation tool may be adapted to provide a selection of different domains or set of domains, and/or may be adapted to allow input of domain characteristics or definitions or representations, e.g. based on equations and/or representations of possible behaviour. For different components, different multi-domain representations may be provided. For each component, there may be one, e.g. dedicated or specific, multi-domain representation. A set of parameters associated to a domain may indicate a parameter space available for the component in this domain, and/or a time behaviour of parameters, and/or possible responses to interaction with other components, e.g. based on physical equations or representations thereof.

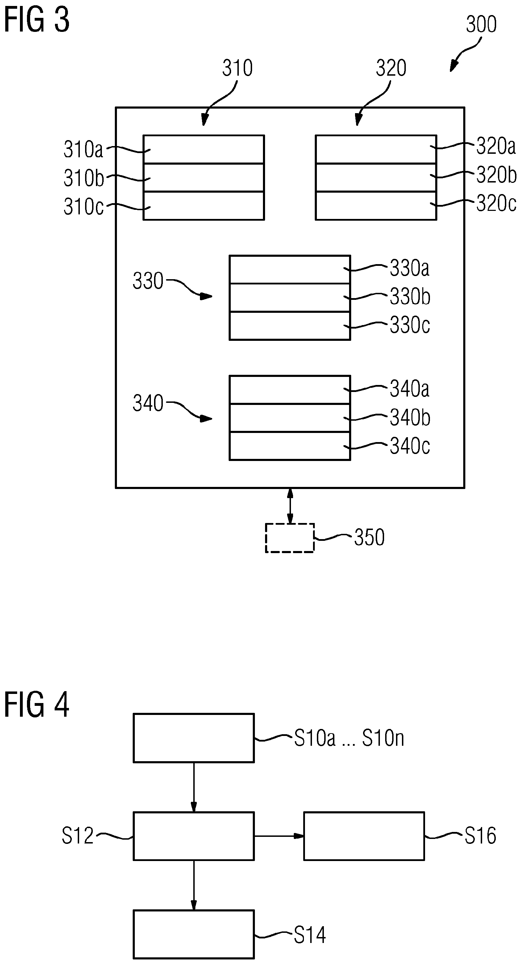

Fig. 3 shows a model 300 comprising, and/or based on, multi-domain representations 310, 320, 330 and 340 of associated components. The model may be considered a simulation of, or be used for simulating, the physical system comprising the components represented by representations 310...340. To each representation 310...340, there is associated a set of domains a...c. As noted before, there may be different sets and/or numbers and/or types of domains associated to different components or representations, depending on the physical system to be simulated. The simulation tool may generally be adapted for simulating different physical systems, e.g. based on input. For example, such input may identify the components of the system, and/or the associated domains, based on which the system may be defined or identified.

The simulation may generally produce and/or comprise output or output data, which may for example be provided to an optional interface 350, e.g. for visualisation, and/or control and/or development of a physical system.

Alternatively, or additionally, additional information may be provided to the simulation tool/simulation for simulating the physical system, e.g. based on monitoring an actual system or component and/or based on input. The interface 350 may be considered representative of a plurality of interfaces, which may be provided for one or more different uses, e.g. for input from a user and/or control of a component. One such interface may for example comprise, and/or be connected or connectable to, a screen for visualisation.

Generally, in the model, connections and/or interactions between representations of components may be provided or indicated, e.g. in the same domain, or in some cases across domains. Such interactions may for example describe inflow and/or outflow pertaining to a domain specific parameter or set of parameters, and/or signalling provided.

Fig. 4 shows an exemplary flow diagram of a method of simulating a physical system, which may for example be performed by, and/or be performed utilising, a simulation tool as described herein. The method may comprise one or more actions S10a...n of providing one or more multi-domain representations of components of a physical system, e.g. based on user input. For each component, one representation may be provided in one associated action S10a...b. In some cases, a user may indicate, e.g. using a graphical user interface associated to the simulation tool, one or more components, and/or one or more domains for a component or the system. The method may comprise providing a multi-domain representation for each of the components, e.g. for each component separately. A multi-domain representation may be created or provided upon indication of the existence of a component in at least one domain, e.g. based on input and/or a visualisation of this domain, e.g. on a graphical plane or layer. The representation may be created or provided such that it covers more than one domain, as a multi-domain representation.

In an action S12, a simulation or model of the physical system based on the multi-domain representations may be provided. The simulation may pertain to a plurality of domains. Providing a simulation or model may comprise evaluating interactions between components, and/or input provided regarding the components and/or domains, and/or performing a static or dynamic simulation. It may be considered that providing a simulation may comprise monitoring the behaviour of one or more components, respectively their representations, e.g. in one or more domains, and/or providing corresponding data, e.g. to a memory or storage medium and/or an interface. Generally, providing a simulation or model may be based on additional information, which may be based on input. Such additional information may in particular describe operational conditions and/or boundary conditions, e.g. for one or more components and/or one or more domains. In some optional variants, an action S14 may be performed. Action S14 may comprise visualising the simulation, e.g. providing a domain view of one or more components. Visualising may generally comprise providing a graphical representation, e.g. on a screen and/or a printer and/or in a file. It may be considered that visualising the simulation in general comprises providing a graphical representation of one or more components, and/or the model of the physical system, and/or results of the simulation, in one or more domains. In some cases, the model may be visualised for all domains. A domain view may be a graphical representation considering only one domain, or a specific selection of domains, e.g. representing a fluid flow and/or electric current distribution. In general, a domain view may be provided as a layer and/or worksheet and/or 2-dimensional representation and/or map and/or picture. A set of different domain views representing different domains, and, optionally, one or more combinations of one or more domains, in particular, all domains of the model, may be provided or defined, e.g. for user selection. Combinations may be selectable, e.g. based on input. A user interface for selecting combinations and/or a domain view may be provided, responsive to which a domain view may be graphically represented and/or visualised and/or adapted. The domain view may be switched or switchable, e.g. based on input, between elements of such a set. A domain view may be static, e.g. representing a specific state of the physical system and/or model. In some variants, it may be dynamic, e.g. representing a time development of the system or model. Visualising may be based on input, e.g. a selection of one or more domains, and/or may comprise switching between different domain views, e.g. based on input. It may be considered that visualising is static or dynamic or a hybrid thereof, e.g. such that a user may switch between views of different time steps. The simulation tool may be adapted for visualising as described herein. A further optional action S16, which may be additional or alternative to action S14, may be considered. Action S16 may comprise controlling and/or developing a physical system based on the simulation provided. Such controlling or developing may for example include providing control signalling via an interface to one or more components, e.g. based on the simulation. Alternatively, or additionally, controlling or developing may comprise receiving signalling from one or more components, based on which for example action S12 may be performed. It should be noted that action S12 may be performed before actions S14 and/or S16, e.g. such that a simulation data set is provided before visualising or controlling or developing. However, in some cases, action S12, S14 and/or S16 may be performed in parallel, for example when providing parallel visualisation or control. In general, when providing the simulation or during simulating the system, one or more parameter values associated to a component or its representation may change, e.g. according to interactions between components, and/or equations and/or input pertaining to the component or its representation, in particular in one or more domains.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Any module described herein may be implemented in software, e.g. as a program module or separate program interacting with another program. Input may generally be user input, e.g. using a graphical user interface, and/or be based on reading structured input, e.g. from a file and/or database and/or memory or storage medium. A simulation tool may comprise processing circuitry and/or one or more interfaces. It may be considered that a simulation tool is implemented as or on a computer, and/or a dedicated simulation device. Processing circuitry may comprise integrated circuitry, e.g. one or more processors and/or controllers, e.g. microcontrollers, and/or one or more FPGAs (Field-Programmable Gate Array) and/or ASICs (Application-Specific Integrated Circuitry). The processing circuitry may comprise, and/or be connected or connectable to one or more memories and/or storage media, e.g. for reading and/or writing and/or accessing data. Processing circuitry may be located on one device, or be distributed. A memory or storage medium may be magnetic and/or optical and/or electrical and/or volatile and/or nonvolatile. Examples of memories or storage media comprise flash memory, read-only memory, random access memory, CD/DVD/BlueRay, cache memory, buffer memory, etc. A control parameter may represent a value of a control signal, e.g. in a signalling or control or automatization domain.

## Claims

1. Method of simulating a physical system (100), the physical system (100) comprising a plurality of components (110,..., 140), wherein the simulation pertains to a plurality of domains (210,..., 240), wherein different domains (210,..., 240) represent different sets of parameters pertaining to the physical system (100), the method comprising providing, for at least one of the plurality of components (110, ..., 140), a multi-domain representation (200), wherein a multi-domain representation (200) represents a component (110,..., 140) in two or more domains (210,..., 240), and providing a simulation of the physical system (100) based on the multi-domain representation (200).

2. Method according to claim 1, wherein a domain (210,..., 240) represents a set of physical parameters and/or control parameters of the physical system (100), in particular a set of parameters pertaining to dynamics and/or flow.

3. Method according to claim 1 or 2, wherein the plurality of domains (210,..., 240) comprises at least two of kinematic domain, mechanic domain, thermodynamic domain, electromagnetic domain, control or automatization domain, hydrodynamic domain, pressure domain, force domain, hydraulic domain, acoustic domain, vibration domain, electric domain, signalling domain, stress domain, magnetic domain.

4. Method according to one of claims 1 to 3, wherein the method comprises controlling and/or developing a physical system (100) based on the simulation.

5. Method according to one of claims 1 to 4, wherein providing a simulation comprises visualising the simulation.

6. Method according to claim 5, wherein visualising comprises providing a domain view of one or more components (210,..., 240), in particular based on a domain selection.

7. Simulation tool for simulating a physical system, the physical system (100) comprising a plurality of components (110,..., 140), wherein the simulation pertains to a plurality of domains (210,..., 240), wherein different domains (210,..., 240) represent different sets of parameters pertaining to the physical system (100), wherein the simulation tool is adapted for providing, for at least one of the plurality of components (110,..., 140), a multi-domain representation (200), wherein a multi-domain representation (200) represents a component (110,..., 140) in two or more domains (210,..., 240), and wherein the simulation tool further is adapted for providing a simulation of the physical system (100) based on the multi-domain representation (200).

8. Simulation tool according to claim 7, wherein a domain (210,..., 240) represents a set of physical parameters and/or control parameters of the physical system (100), in particular a set of parameters pertaining to dynamics and/or flow.

9. Simulation tool according to claim 7 or 8, wherein the plurality of domains (210,..., 240) comprises at least two of kinematic domain, mechanic domain, thermodynamic domain, electromagnetic domain, control or automatization domain, hydrodynamic domain, pressure domain, force domain, hydraulic domain, acoustic domain, vibration domain, electric domain, signalling domain, stress domain, magnetic domain.

10. Simulation tool according to one of claims 7 to 9, the simulation tool further being adapted for controlling and/or developing a physical system (100) based on the simulation.

11. Simulation tool according to one of claims 7 to 10, wherein providing a simulation comprises visualising the simulation.

12. Simulation tool according to claim 11, wherein visualising comprises providing a domain view of one or more components (110,..., 140), in particular based on a domain selection.

13. Simulation tool according to one of claims 7 to 12, the simulation tool comprising an interface (350) to one or more components (110,..., 140) of the physical system (110) represented in the simulation.

14. Computer program comprising instructions causing a computer system to perform and/or control a method according to one of claims 1 to 6.

15. Storage medium storing a computer program according to claim 14.
